# EUROPÄISCHE PATENTANMELDUNG

(11) **EP 0 037 454 A2**
(43) Veröffentlichungstag der Anmeldung: **14.10.1981**
(21) Anmeldenummer: 81100800.2
(22) Anmeldetag: 05.02.1981
(51) Int. Cl.: A21D 2/36, A23L 1/16

(54) **Verfahren zur Herstellung von Teig- und Backwaren**

(30) Priorität: 05.04.1980 DE 3013348
(71) Anmelder: Haberl, Paul, A-2821 Klein-Wolkersdorf 35 (AT)
(72) Erfinder: Haberl, Paul, A-2821 Klein-Wolkersdorf 35 (AT)
(74) Vertreter: Patentanwälte Dr. Ing. Eugen Maier Dr. Ing. Eckhard Wolf

(57) **Zusammenfassung**

Bei einem Verfahren zur Herstellung von Teig- und Backwaren aus einem Getreidemehl, -schrot oder -bruch werden einem Ausgangsgemisch aus einem Getreidemehl, beispielsweise Weizen und/oder Roggenmehl zerkleinerte Pflanzen oder Pflanzenteile als Zusatzstoffe beigemischt und aus dem daraus durch Kneten und Treibenlassen bereiteten Teig Formlinge hergestellt und getrocknet oder gebacken. Die Pflanzen werden in ausreichender Menge zugesetzt, so daß sie die Verwendung auch solcher Getreidemehle ermöglichen, die sonst nicht zu einem einwandfrei quell- oder backfähigen Teig verarbeitet werden können und daß sie außerdem ihre günstigen ernährungsphysiologischen Wirkungen entfalten können. Als Pflanzenzusätze werden getrocknete und vermahlene Luzerne, verschiedene Kleesorten und Trockenschnitzel der Zuckerrüben in Betracht gezogen, die durchweg einen besonders hohen Gehalt an Eiweißstoffen, wie Pektine, Hemicellulosen, Pentosanen und Mineralstoffen aufweisen, die die Quell- und Backeigenschaften eines Teiges verbessern.

## Beschreibung

### Verfahren zur Herstellung von Teig- und Backwaren

Die Erfindung betrifft ein Verfahren zur Herstellung von Teig- und Backwaren aus einem Getreidemehl, -schrot oder -bruch, beispielsweise Weizenmehl und/oder Roggenmehl, Wasser, Kochsalz und ggf. Hefe sowie zerkleinerte Pflanzen oder Pflanzenteile als Zusatzstoffe enthaltenden Ausgangsgemisch durch Kneten und Treibenlassen des Ausgangsgemisches und anschließendes Trocknen oder Backen von aus dem so vorbereiteten Teig hergestellten Formlingen. Unter Teigwaren sollen im folgenden vor allem Nudeln, Spaghetti, _{M}akkaroni, Teigplatten u.dgl. aus getrocknetem Teig und unter Backwaren insbesondere Brot, Zwieback, Kekse, Dauerbrot u.dgl. verstanden werden.

Zur Teigwaren- und Brotherstellung verwendetes Getreidemehl muß, abgesehen vom Ausmahlgrad des Getreidekorns und seiner Mahlfeinheit, noch hinsichtlich seines Gehalts an Stärke, Eiweißstoffen und Mineralstoffen sowie anderen, ebenfalls bei der Teigbereitung wirksamen Stoffen, wie Fermenten, Vitaminen od.dgl., bestimmten Anforderungen genügen. Da der Gehalt eines Getreidemehls an diesen Stoffen vom Klima im Anbaugebiet und auch vom Nährstoffgehalt des Ackerbodens abhängt und außerdem von den jeweils herrschenden Witterungsverhältnissen beim Aufkeimen und beim Ausreifen der Saat beeinflußt wird, werden die darauf zurückzuführenden Unterschiede der Eigenschaften einzelner Getreidemehle durch Vermischen von Mehlen ausgeglichen, um eine möglichst gleichmäßige Beschaffenheit und Güte des Fertigproduktes zu erzielen. Die Herstellung von Mehlen bestimmter Beschaffenheit durch Vermischen einzelner Getreidemehle macht es erforderlich, auch Getreidemehle mit einer von der gewünschten Zusammensetzung stark abweichenden Zusammensetzung in großen Mengen zu lagern, um auch durch Vermischen von Getreidemehlen mit einer nach entgegengesetzten Richtungen mehr oder weniger stark abweichenden Zusammensetzung das gewünschte Endprodukt herstellen zu können. Häufig erfolgt das Vermischen einzelner Mehle im Bäckereibetrieb selbst, da in der Mühle nicht immer allen Wünschen der Bäcker Rechnung getragen werden kann.

Zur Verbesserung des Backverhaltens ist es bereits bekannt, einem Weizenmehl als Backhilfsmittel zerkleinerte ungiftige Pflanzen oder Pflanzenteile der Familien Cruciferae, Resedaceae, Capparidacae oder Tropaeolaceae in einem Mengenanteil von 0,0002 bis maximal 0,6% zuzusetzen. Bei diesen geringen Mengenanteilen kommt eine eventuelle ernährungsphysiologische Bedeutung der genannten Pflanzen offensichtlich noch nicht zur Wirkung.

Der Erfindung liegt demgegenüber die Aufgabe zugrunde, ein Verfahren zur Teig- und Backwarenherstellung zu entwickeln, bei welchem ausgewählte-Pflanzen. in zerkleinerter Form in ausreichender Menge zugesetzt werden, so daß sie die Verwendung auch solcher Getreidemehle ermöglichen, die sonst nicht zu einem einwandfrei quell-oder backfähigen Teig verarbeitet werden können und daß sie außerdem ihre günstigen ernährungsphysiologischen Wirkungen entfalten können.

Zur Lösung dieser Aufgabe werden die in den Patentansprüchen 1 bis 3 angegebenen Merkmalskombinationen vorgeschlagen. Weitere vorteilhafte Ausgestaltungen und Weiterbildungen der Erfindung ergeben sich aus den Unteransprüchen.

Die erfindungsgemäße Lösung geht von der Erkenntnis aus, daß die üblicherweise als Futtermittel für Tiere verwendeten Kleesorten, Luzerne und Trockenschnitzel der Zuckerrüben einen besonders hohen Gehalt an Eiweißstoffen, wie Pektine, Hemicellulosen, Pentosanen und Mineralstoffen aufweisen, die in vielen nicht zu einwandfrei quell- oder backfähigem Teig verarbeitbaren Getreidemehlen fehlen und daß ein Zusatz von bestimmten Mengen aus einem durch Vermahlen der vorgenannten Pflanzen gewonnenen Pflanzenmehl zum Teig einen einwandfrei verarbeitbaren Teig herzustellen gestattet.

Im Rahmen des erfindungsgemäßen Verfahrens kann wegen der günstigen Eigenschaften der Pflanzenzusätze eine relativ hohe Wasseraufnahme und Teigausbeute erzielt werden, wobei der Teig für das Wachstum der Hefe, einschließlich Sauerteighefe, günstige Eigenschaften erhält und deshalb unter sonst normalen Bedingungen rasch reift. Ein aus der Verwendung der Pflanzenzusätze bei der Teigwaren-und Brotherstellung resultierender wertvoller Nebeneffekt : liegt darin, daß wegen des auf Roggen- und Weizenmehl bezogenen höheren Gehalts der Pflanzen an Calcium, Magnesium, Natrium, Kalium, Eisen und Kobalt und auch an den essentiellen Aminosäuren Lysin und Cystin der Nährwert des hergestellten Nahrungsmittels erhöht und daß auch Geschmack und Aroma verbessert werden. Neben der Luzerne (Medicago sativa) kommen als pflanzliche Zusätze nach der Erfindung vor allem folgende Kleesorten in Betracht:
Alexandrinerklee (Trifolium alexand.)
Bokharaklee (Melilotus albus)
Esparsette i.H. (Onobrychis sativa)
Gelbklee (Medicago lupulina)
Hornschottenklee (Lₒtus corniculatus)
Inkarnatklee (Trifolium incarnat.)
Persischer Klee (Trifolium resupinat.)
Rotklee (Trifolium pratense)
Schwedenklee (Trifolium hybridum)
Serradella (Ornithopus sativus)
Sumpfschottenklee (Lotus uliginosus)
Weißklee (Trifolium repens)
Wundklee (Anthyllis vulneraria).

Weiter haben sich vermahlene Trockenschnitzel der Zuckerrübe (Beta vulgaris saccharifera L.), die bei der Zuckergewinnung anfallen und die gegebenenfalls mit der ebenfalls bei der Zuckergewinnung entstehenden Melasse behandelt sein können, als besonders günstig erwiesen.

Vorzugsweise wird im Rahmen des erfindungsgemäßen Verfahrens Pflanzenmehl aus nicht ausgereiften Klee- oder _{L}uzernesorten eingesetzt, da diese Pflanzen vor dem Fruchtansatz den höchsten Gehalt an den für die Brotherstellung günstigen Stoffen besitzen. Dementsprechend ist es von Vorteil, Pflanzenmehl aus höchstens im Blütenstadium befindlichen Klee- oder Luzernesorten einzusetzen. Hierbei ist es aus Gründen der Haltbarkeit und Lagerfähigkeit des Pflanzenmehls vorzuziehen, Mehl aus getrockneten, insbesondere luftgetrockneten Pflanzen zu verwenden.

Die Pflanzen können mit einem Gewichtsanteil von 0,5 bis 20%, bezogen auf das im Ausgangsgemisch enthaltene Getreidemehl, eingesetzt werden. Optimale Ergebnisse werden bei einem Pflanzenanteil von ca. 1 bis 10% erhalten.

Um die in den Pflanzen enthaltenen Stoffe möglichst gleichmäßig im Teig verteilen zu können, ist es von Vorteil, das Pflanzenmehl mit möglichst kleiner Teilchengröße einzusetzen. Obwohl Teilchengrößen bis zu etwa 1000µm möglich sind, haben sich Teilchengrößen von 5 bis 225 pm als besonders vorteilhaft erwiesen. .

Für die Wasserbindung des Mehls im Zuge der Teigbereitung ist in erster Linie das Eiweiß bzw. der Kleber von Bedeutung. Zusätzlich haben noch die Quellstoffe (Pentosane) sowie auch die Stärke, wenn sie aufgeschlossen ist und die Amylose Wasser aufsaugen kann, einen wichtigen Einfluß in diesem Zusammenhang. Das im Zuge der Teigbereitung gebundene Wasser muß beim Backprozeß von der verkleisterten Stärke eingelagert werden, um eine einwandfreie Krumenbeschaffenheit zu erhalten. Durch den Gehalt der zugesetzten Pflanzen an Mineralstoffen, Spurenelementen und hochwertigen Aminosäuren, welche die Rolle eines Lösungsvermittlers annehmen können, tritt bei der erfindungsgemäßen Teigbereitung ein gesteigertes Wasserbindevermögen und damit eine erhöhte Teigausbeute auf.

Es hat sich in vielen Versuchen mit den genannten Pflanzenzusätzen gezeigt, daß sich der Teig mit dem Zusatz im wesentlichen normal aufarbeiten läßt und daß trotz der erhöhten Wasseraufnahme eine verstärkte Klebrigkeit im Vergleich zum unbehandelten Mehl nicht zu erkennen ist. Vor allem in der ersten Teigphase ist eine intensivere Teigreifung feststellbar, die eine raschere Aufarbeitung des Teiges ermöglicht. Man erhält einen straffen, gut elastischen Teig mit hohem Dehnwiderstand. Beeinflußt wird dieser Ablauf durch Oxidationsprozesse, wobei die Mineralsalze der Pflanzenzusätze als Sauerstoffüberträger die Rolle eines Vermittlers oder Katalysators spielen können. Der hohe Rohfasergehalt der erfindungsgenäßen Pflanzenzusätze bewirkt eine Anreicherung von Ballaststoffen im Mehl, was sich in diätetischer Hinsicht positiv auswirkt. Das fertige Gebäck weist im wesentlichen normale Porung der Krume auf.

In den folgenden Ausführungsbeispielen sind die Ergebnisse einiger Vergleichsuntersuchungen an Mehlen mit und ohne den erfindungsgemäßen pflanzlichen Zusatzstoffen angegeben und erläutert.

Als Ausgangsmehl wurde ein Bäckermehl mit der öster-. reichischen Typenbezeichnung W 700 verwendet, also ein Weizenmehl (W) mit einem Mineralstoffgehalt (Aschegehalt) von 0,7% (700) sowie einem Ascorbinsäurezusatz von 0,0015%. Die bei den Versuchen verwendeten pflanzlichen Zusatzstoffe wurden bis auf eine Restfeuchtigkeit von 10-14% getrocknet, mit einer Schlagkreuzmühle vermahlen und anschließend gesiebt, so daß sich eine Korngröße von weniger als 225 um ergab. Das auf diese Weise erhaltene Pflanzenmehl wurde in verschiedenen Mengenverhältnissen dem Getreidemehl vor der Teigbereitung in einer Mehlmischanlage homogen beigemischt.

Die an den Mehlen vorgenommenen Standarduntersuchungen und die hierfür erforderlichen Apparaturen und Zustandsbedingungen sind in dem Buch von Helmut Aberham "Bewährte Untersuchungsmethoden", Victoria-Verlag, Wien, beschrieben.-In diesem Buch sind ferner die genauen Definitionen der ermittelten Maßzahlen angegeben, denen qualitativ folgende Bedeutung zukommt:
Ascheqehalt: Mineralstoffgehalt des Mehls, der mit zunehmendem Ausmahlungsgrad ansteigt und der die Grundlage für die Mehltypisierung bildet.
Klebermen^{q}e: Prozentualer Anteil an auswaschbarem Weizeneiweiß (Gluten), das bei der Teigbereitung die _{W}asserbindung bestimmt und verantwortlich ist für das Teigstandvermögen und das Gebäckvolumen.

### Quellzahlen Qₒ und Q₃₀ (nach Berliner):

Maßzahlen für die Quellfähigkeit und damit die Güte des Klebers, die ebenso wie die Klebermenge ein wichtiges Kriterium für die Backfähigkeit bilden. Bestimmt wird die _{St}rukturquellzahl Q₀ und die proteolytische Quellzahl Q₃₀, letztere nach halbstündiger Reigruhe.
Maltose: Maß für die Triebeigenschaften eines Mehls, das anzeigt, in welchem Ausmaß Stärke als Nahrung für die Hefe zu vergärbarem Zucker abgebaut wird.
Fallzahl: Maß für die Verkleisterungsfähigkeit eines Mehles und damit für die Aktivität der stärkeabbauenden Enzyme. Die Verkleisterung muß in ausreichendem Maße gegeben sein, um eine normale Krumenbeschaffenheit des Brots zu gewährleisten.
Farinogramm: Mit dem Farinographen nach Hanoczy-Brabender wird der Widerstand des Teiges gegen eine stets gleichbleibende mechanische Beanspruchung (Knetung) vom Augenblick der Teigbildung an gemessen und im zeitlichen Verlauf in Form einer Kurve als Kraft-Zeit-Diagramm (Farinogramm) registriert. Es können daraus Rückschlüsse auf das Knetverhalten eines Mehls und die Wasseraufnahmefähigkeit gezogen werden. Je höher der Klebergehalt des Mehles ist, desto besser ist im allgemeinen die Wasseraufnahme und die Entwicklungszeit des Teiges. Je besser die Kleberqualität ist, desto höher sind die Werte für die Stabilität und die Konstanz. Die genannten Maßzahlen lassen sich aus dem Verlauf des Farinogramms ermitteln.
Extensogramm: Mit dem Extensographen nach Brabender wird das Dehnverhalten eines Teigstrangs gemessen, wobei der Dehnwiderstand und die Dehnbarkeit (Dehnlänge) des Teiges in Form einer Kurve (Extensogramm) registriert werden. Durch diese Messung ist erkennbar, wie weit sich der Teig im Verlaufe der Gärung nach 45, 90 und 135 Minuten durch die entstehende Kohlensäure ausdehnen läßt und wie er sich bei dieser Dehnung verhält. Die Länge der nach 135 Minuten aufgenommenen Kurve gibt die Dehnlänge und die Höhe den Dehnwiderstand an. Die Fläche unter der Kurve wird als Energie bezeichnet und gilt als Maß für die _{G}rundqualität eines Mehles. Das Verhältnis von Dehnwiderstand und Dehnlänge (Dw/D1) charakterisiert das rheologische Verhalten des Teigs.
Maturogramm: Der Maturograph dient zur Bestimmung der Gäreigenschaften. In einem auf konstante Temperatur und Luftfeuchtigkeit gehaltenen Gärraum wird das Gärverhalten des Teiges geprüft und aufgezeichnet (Maturogramm). Es wird dabei labormäßig ein praktischer Backversuch simuliert. Verwendet wird ein definierter Teig, der auch Hefe und Salz enthält. Die Endgärzeit ist die Zeit bis zum Erreichen der optimalen Gäreigenschaften, d.h. die Zeit, nach welcher das Gärvolumen deutlich wieder absinkt. Die Gärstabilität ist der Zeitraum, in welchem der Teig die optimalen Gäreigenschaften besitzt und ist damit ein Maß für die Empfindlichkeit des Teigs. Der Teigstand ist das maximale Gärvolumen des Teiges im Verlauf des Maturogramms. Die Teiqelastizität ist die Bandbreite des Maturogramms im Bereich des Maximums, die durch eine periodische Belastung des Teigs gemessen wird und die gleichfalls ein wichtiges Kriterium der Mehlqualität darstellt.
Ofentriebkurve: Die Ofentriebkurve wird in einem Ofentriebgerät aufgenommen, das ein Ölbad enthält, in das eine bestimmte Menge Teig zum Zeitpunkt der optimalen Teigreife eingesetzt und kontinuierlich von 30 bis 100 °C aufgeheizt wird. Mit dieser Meßanordnung wird die kontinuierliche Volumenveränderung in Abhängigkeit von der Backtemperatur erfaßt (Ofentriebkurve). Das Teiqvolumen gibt das Volumen zu Beginn des Backvorgangs wieder. das Gesamtvolumen gibt das Volumen des ausgebackenen Gebäcks am Ende des Versuchs an. Aus der Differenz zwischen Teigvolumen und Gesamtvolumen errechnet sich der Ofentrieb des Gebäcks.

### Ausführungsbeispiel I

Luzerne (Medicago sativa) wurde im Stadium der ersten Blüte geschnitten und anschließend zerkleinert sowie in einem Heißlufttrockner bei einer Temperatur von ca. 60 °C bis zu einer Restfeuchtigkeit von etwa 12% getrocknet, sodann vermahlen und auf eine Teilchengröße von weniger als 225 µm gesiebt.

Das so erhaltene Luzernegrünmehl enthält ca. 20% Rohprotein und 66% verdauliche Nährstoffe (TDN = Total digestible nutrients) in der Trockenmasse. An Mineralstoffen sind je Kilogramm Luzernegrünmehl 12,0 g Calcium, 2,4 g Phosphor, 1,9 g Magnesium, 1,2 g Natrium, 21,5 g Kalium und 6,5 g Chlor enthalten. Außerdem sind eine Reihe von Spurenelementen, wie Eisen, Mangan, Kupfer, Kobalt und Zink vorhanden.

Das Luzernegrünmehl wurde einem Weizenmehl der österreichischen Type W 700 in einem Mengenverhältnis von 1,3,6 und 20% homogen beigemischt. An dem Mehlgemisch mit 3% Luzernegehalt und an dem zusatzfreien Mehl wurden die oben erläuterten Standarduntersuchungen durchgeführt. Für die Mehlgemische mit 1,6,20% wurden lediglich die Extensogramme aufgenommen und ausgewertet. Die bei diesen Untersuchungen erhaltenen Ergebnisse sind in der Tabelle I zusammengestellt.

Die in der Tabelle I aufgeführten Ergebnisse sind wie folgt zu beurteilen:

Durch den Luzernezusatz tritt eine starke Erhöhung des Aschegehalts ein. Die Klebermenge wird unwesentlich erhöht, es ist jedoch eine geringfügige Verschlechterung der _{K}leberqualität, also der Kleberquellfähigkeit zu beobachten, wie dies in den Quellwerten Q_{O} und Q₃₀ zum Ausdruck kommt. Der Maltosegehalt wird etwas erhöht und die Fallzahl erniedrigt. Es ist hier also eine verstärkte Amylaseaktivität zu beobachten. welche den Stärkekomplex dahingehend beeinflußt, daß das Triebvermögen gesteigert und die Verkleisterung reduziert wird.

Bei der Teigprüfung kommt klar zum Ausdruck, daß die Wasseraufnahme bei einer bestimmten Teigkonsistenz (500 E) gesteigert wird, so daß mit einer erhöhten Teigausbeute gerechnet werden kann. Beim Knetverhalten im Farinogramm ist in der ersten Phase der Teigentwicklung kein unterschiedliches Verhalten zu erkennen; in der letzten Phase ergibt sich allerdings ein leichtes Absinken der Teigkonstanz, was insgesamt auf eine verminderte Knettoleranz hinweist. Im Extensogramm und Maturogramm kommen die

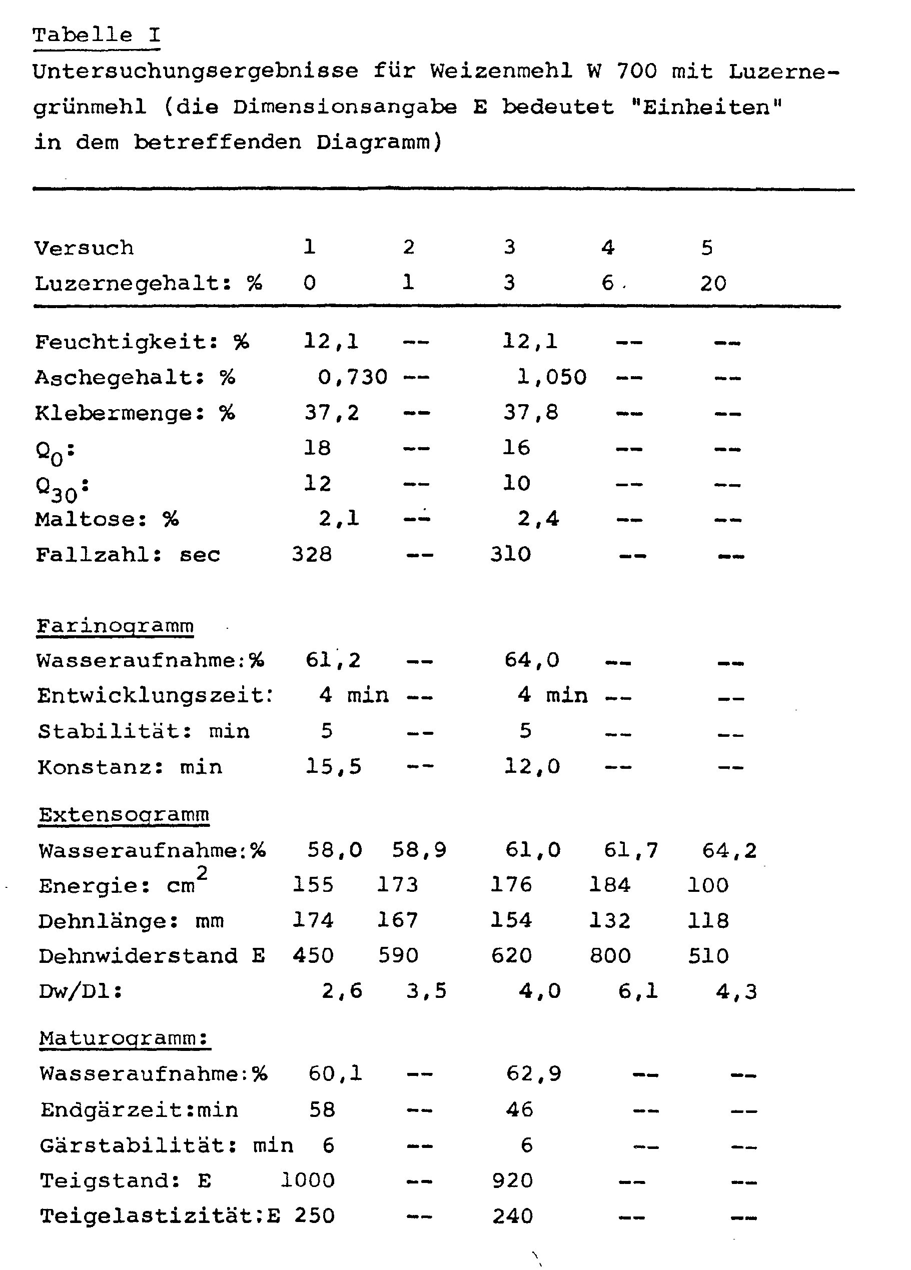

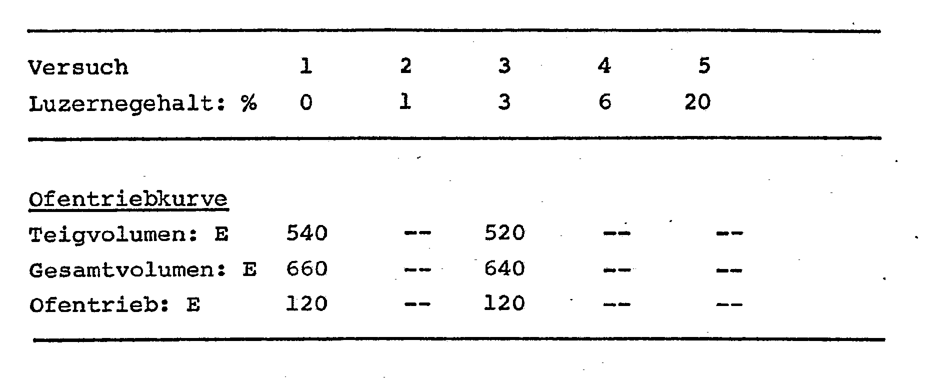

Teigreifungsverhältnisse zum Ausdruck. Mit dem Zusatz von Luzernegrünmehl läßt sich der Teig im wesentlichen normal aufarbeiten; es ist keine verstärkte Klebrigkeit gegenüber dem unbehandelten Mehl zu erkennen. Im Extensogramm zeigt sich eine Intensivierung der Teigreifung, was in verminderter Dehnlänge und erhöhtem Dehnwiderstand zum Ausdruck kommt. Bei den Versuchen mit 6 und 20% Zusatz von Luzernegrünmehl ist die Wasseraufnahme weiterhin deutlich angestiegen. Im Falle eines 20%igen Zusatzes werden die Kurven im Extensogramm aber extrem stark verkürzt und erhöht, was darauf hindeutet, daß das Optimum überschritten ist. Der Teig verliert seine Elastizität und weist eine lehmige bis brüchige Struktur auf.

Im Maturogramm kommt zum Ausdruck, daß das Gärverhalten des Teiges insgesamt etwas schwächer als im unbehandelten Zustand ist. Die Endgärzeit ist deutlich reduziert. Allerdings ist auch das Gesamtgärverhalten mit Luzernegrünmehl etwas schwächer, was in dem verminderten Teigstand zum Ausdruck kommt. Auch die Volumenwerte im Backvorgang, die sich nach der Ofentriebkurve ergeben, sind geringfügig vermindert.

### Ausführungsbeispiel 11

Extrahierte Zuckerrübenschnitzel, die bei der Gewinnung von Zucker aus Zuckerrüben (Beta vulgaris saccherifera L.) zurückbleiben, wurden abgepreßt und mit ebenfalls bei der Zuckergewinnung anfallender Melasse gemischt, um sodann mit Feuergasen bei einer Temperatur von 105 °C bis zu einem Restwassergehalt von ca. 12% getrocknet und pelletiert zu werden. In einem weiteren Arbeitsgang wurden die Pellets mit einer Stiftmühle vermahlen und anschließend auf 225 pm abgesiebt.

Das so erhaltene Trockenschnitzelmehl enthielt 87,9% Trockensubstanz mit folgenden prozentualen Bestandteilen:

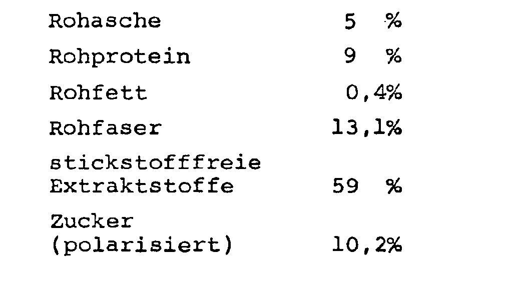

Das Trockenschnitzelmehl wurde einem Weizenmehl der österreichischen Type W 700 in einem Mengenverhältnis von 1,2,6 und 20 Gewichtsprozent homogen beigemischt. An den Mehlgemischen und dem unbehandelten Mehl wurden die oben beschriebenen Untersuchungen durchgeführt, wobei für die Mehlgemische mit einem Anteil von 1,6 und 20% Trockenschnitzelmehl lediglich Extensogramme aufgenommen wurden. Die hierbei erhaltenen Ergebnisse sind in der Tabelle II zusammengefaßt.

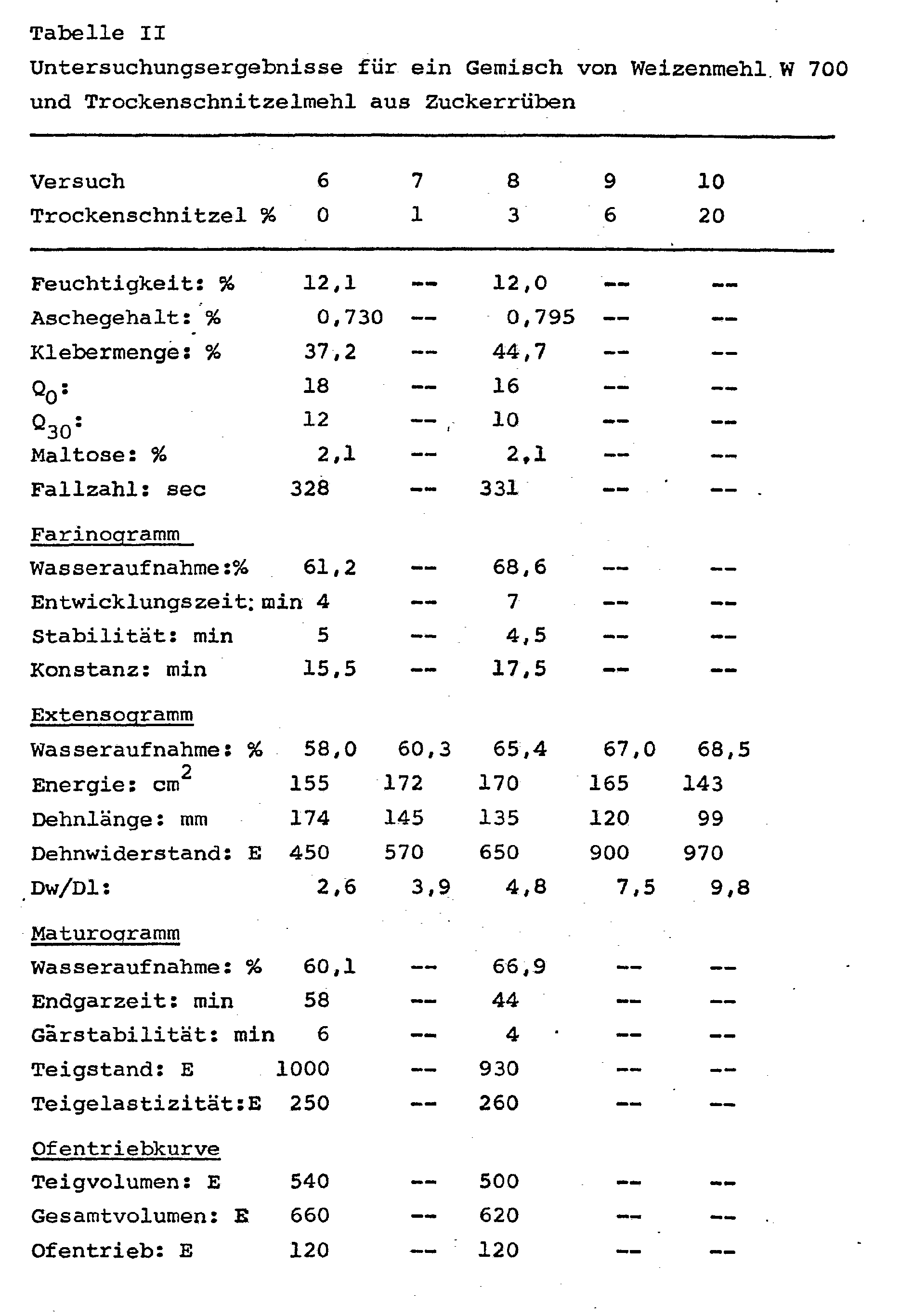

Die Ergebnisse zeigen, daß bei einem Zusatz von Trockenschnitzelmehl eine leichte Erhöhung des Aschegehalts eintritt. Beim Klebergehalt ist eine geringfügige Steigerung zu beobachten, die vermutlich auf eine erhöhte _{H}aftwässerbindung zurückzuführen ist. Die Quellzahlen lassen nur eine geringfügige Reduktion erkennen; die Quellfähigkeit des Klebers wird also nur in geringem Maße beeinflußt. Beim Maltosegehalt und bei der Fallzahl ist keine Veränderung zu erkennen; es liegt also keine Veränderung der Amylaseaktivität vor. Triebvermögen und Verkleisterungsfähigkeit sind in beiden Fällen praktisch gleich.

Der Teig erscheint mit dem Zusatz von Trockenschnitzelmehl geringfügig dunkler. Die Verarbeitungsfähigkeit des Teiges ist normal, lediglich unmittelbar nach Beginn des Knetens ist ein leichtes Kleben erkennbar, das im Zuge der weiteren Verarbeitung verschwindet. Die Wasseraufnahme wird bei einer bestimmten Teigkonsistenz (500 E) deutlich erhöht, so daß mit einer verbesserten Teigausbeute gerechnet werden kann. Aus dem Farinogramm ergibt sich beim Zusatz von Trockenschnitzelmehl in der ersten Phase der Teigknetung eine Verlängerung der Teigentwicklungszeit. Bei der Teigstabilität und Konstanz ist keine wesentliche Änderung ersichtlich.

Im Extensogramm zeigt sich mit den Zusätzen eine Intensivierung der Teigreifung, was in verminderter Dehnlänge und erhöhtem Dehnwiderstand zum Ausdruck kommt. Bei einem Zusatz von 20% Trockenschnitzelmehl werden die Extensogramme stark verkürzt und erhöht, so daß das Optimum überschritten sein dürfte. Der Teig verliert seine Elastizität und erhält eine lehmige bis brüchige Struktur. Aus den Versuchen ergibt sich, daß ein Zusatz von 1 bis 10% Trockenschnitzelmehl technologisch am günstigsten zu beurteilen ist.

### Ausführungsbeispiel III

Rotkleeheu (Trifolium pratense) mit einem Wassergehalt von 14% wurde mit einer Schlagkreuzmühle zerkleinert und auf 225 pm abgesiebt. Das so erhaltene Kleemehl hatte einen Gehalt an Rohprotein von 117 g pro kg Trockensubstanz sowie einen ähnlichen Gehalt an Mineralstoffen, wie das Luzernegrünmehl gemäß Ausführungsbeispiel I.

Das Kleemehl wurde einem Weizenmehl der österreichischen Type W 500 mit einem Mengenanteil von 6% homogen beigemischt. Die mit dem unbehandelten Ausgangsmehl und mit dem Mehlgemisch aufgenommenen Extensogramme ergaben die in Tabelle III zusammengestellten Ergebnisse.

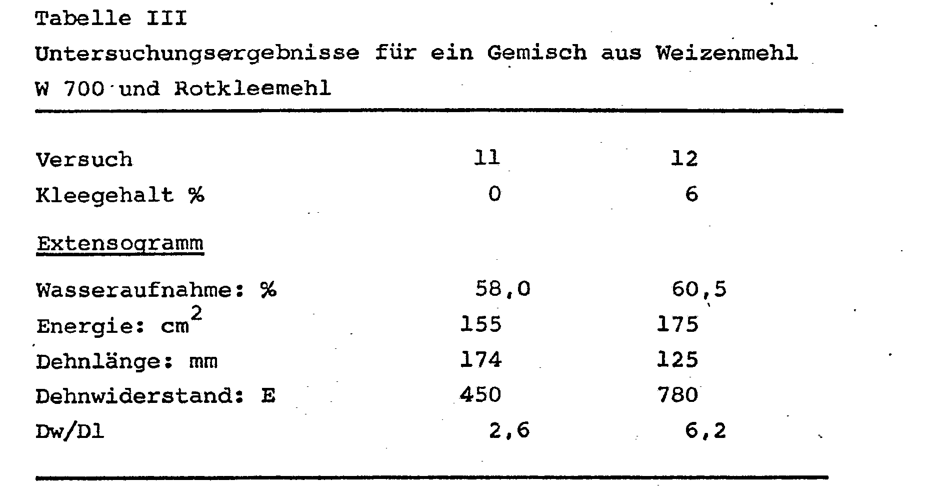

Anhand der aus den Extensogrammen abgeleiteten Ergebnisse zeigt sich wiederum eine deutliche Erhöhung der Wasseraufnahme des behandelten Mehls gegenüber dem unbehandelten Mehl, die auf eine verbesserte Teigausbeute hindeutet. Weiter zeigt sich mit dem Rotkleezusatz eine Intensivierung der Teigreifung, was durch die verminderte Dehnlänge und den erhöhten Dehnwiderstand zum Ausdruck kommt.

## Patentansprüche

1. Verfahren zur Herstellung von Teig- und Backwaren aus einem Getreidemehl, -schrot oder -bruch, beispielsweise Weizenmehl und/oder Roggenmehl, Wasser, Kochsalz und ggf. Hefe sowie zerkleinerte Pflanzen oder Pflanzenteile als Zusatzstoffe enthaltenden AUsgangsgemisch durch Kneten und Treibenlassen des Ausgangsgemisches und anschließendes Trocknen oder Backen von aus dem so vorbereiteten Teig hergestellten Formlingen, dadurch gekennzeichnet, daß dem Ausgangsgemisch als pflanzliche Zusatzstoffe getrocknete und vermahlene Luzerne (Medicago) in einer Menge von 0,5.bis 2 Gewichtsprozent, bezogen auf den im Ausgangsgemisch enthaltenen Getreideanteil, beigemischt wird.

2. Verfahren zur Herstellung von Teig- und Backwaren aus einem Getreidemehl, -schrot oder -bruch, beispielsweise Weizenmehl und/oder Roggenmehl, Wasser, Kochsalz und ggf. Hefe sowie zerkleinerte Pflanzen oder Pflanzenteile als Zusatzstoffe enthaltenden Ausgangsgemisch durch Kneten und Treibenlassen des Ausgangsgemisches und anschließendes Trocknen oder Backen von aus dem so vorbereiteten Teig hergestellten Formlingen, dadurch gekennzeichnet , daß dem Ausgangsgemisch als pflanzliche Zusatzstoffe getrocknete und vermahlene Kleesorten in einer Menge von 0,5 bis 20 Gewichtsprozent, bezogen auf den im Ausgangsgemisch enthaltenen Getreideanteil, beigemischt wird.

3. Verfahren zur Herstellung von Teig- und Backwaren aus einem Getreidemehl, -schrot oder -bruch, beispielsweise Weizenmehl und/oder Roggenmehl, Wasser, Kochsalz und ggf. Hefe sowie zerkleinerte Pflanzen oder Pflanzenteile als Zusatzstoffe enthaltenden Ausgangsgemisch durch Kneten und Treibenlassen des Ausgangsgemisches und anschließendes Trocknen oder Backen von aus dem so vorbereiteten Teig hergestellten Formlingen, dadurch gekennzeichnet , daß dem Ausgangsgemisch als pflanzliche Zusatzstoffe abgepreßte und vermahlene Trockenschnitzel der Zuckerrübe (Beta vulgaris saccharifera L.) in einer Menge von 0,5 bis 20 Gewichtsprozent, bezogen auf den im Ausgangsgemisch enthaltenen Getreideanteil, beigemischt wird.

4. Verfahren nach einem der Ansprüche 1 bis 3, dadurch gekennzeichnet , daß der Anteil an pflanzlichen Zusatzstoffen 1 bis 10 Gewichtsprozent, bezogen auf den Getreideanteil im Ausgangsgemisch, beträgt.

5. Verfahren nach einem der Ansprüche 1 bis 4, dadurch gekennzeichnet , daß die pflanzlichen Zusatzstoffe eine Teilchengröße von höchstens 1000 µm, vorzugsweise weniger als 225 µm, aufweisen.

6. Verfahren nach Anspruch 1 oder 2, dadurch gekennzeichnet , daß die aus Luzerne- oder Kleesorten bestehenden Zusatzstoffe aus nichtausgereiften, höchstens im Blütenstadium befindlichen Pflanzen gewonnen werden.

7. Verfahren nach Anspruch 3, dadurch gekennzeichnet , daß die Trockenschnitzel mit Melasse versetzt und vor dem Vermahlen getrocknet und pelletiert werden.
